# EUROPÄISCHE PATENTSCHRIFT

(11) **EP 1 924 457 B1**
(45) Veröffentlichungstag und Bekanntmachung des Hinweises auf die Patenterteilung: **26.08.2009**
(21) Anmeldenummer: 06793335.8
(22) Anmeldetag: 07.09.2006
(51) Int. Cl.: B60K 15/035

(54) **ENTLÜFTUNGSEINRICHTUNG FÜR EINEN KRAFTSTOFFBEHÄLTER**
VENTILATION DEVICE FOR A FUEL CONTAINER
DISPOSITIF D'AERATION POUR RESERVOIR DE CARBURANT

(30) Priorität: 14.09.2005 DE 102005043888
(43) Veröffentlichungstag der Anmeldung: 28.05.2008
(73) Patentinhaber: Continental Automotive GmbH, 30165 Hannover (DE)
(72) Erfinder: KROGULL, Christian, 58455 Witten (DE); MEYER, Knut, 45239 Essen (DE); REITER, Frank, 42781 Haan Rheinl. (DE)
(86) Internationale Anmeldenummer: PCT/EP2006/066142
(87) Internationale Veröffentlichungsnummer: WO 2007/031466

(56) Entgegenhaltungen:
- EP-A- 1 418 080
- WO-A2-20/05042291
- DE-A1- 10 025 071
- DE-A1- 10 052 399
- DE-A1- 10 238 237
- DE-A1- 19 932 713
- DE-U1- 20 019 968
- JP-A- 2001 138 757

## Beschreibung

Die Erfindung betrifft eine Entlüftungseinrichtung für einen Kraftstoffbehälter mit einer mit zumindest einer Entlüftungsleitung verbundenen Flüssigkeitsfalle und mit einer in der Flüssigkeitsfalle angeordneten Saugstrahlpumpe zur Förderung von Kraftstoff aus der Flüssigkeitsfalle in den Kraftstoffbehälter.

Solche Entlüftungseinrichtungen sind z.B. aus der DE 199 32 713 A1 bekannt und werden zur Entlüftung des Kraftstoffbehälters beim Betanken und während des Betriebs häufig eingesetzt und sind daher bekannt. Meist führen bei heutigen Entlüftungseinrichtungen Entlüftungsleitungen von einem als Flüssigkeitsfalle ausgebildeten Ausperlbehälter zu verschiedenen Seiten des Kraftstoffbehälters und gegebenenfalls zu einem Aktivkohlefilter. Die Saugstrahlpumpe ist mit einer im Kraftstoffbehälter angeordneten Kraftstoffpumpe verbunden und saugt in der Flüssigkeitsfalle angesammelten Kraftstoff ab und fördert ihn in den Kraftstoffbehälter zurück. Die ständige Verbindung der Saugstrahlpumpe mit der Kraftstoffpumpe führt jedoch dazu, dass auch bei leerer Flüssigkeitsfalle die Saugstrahlpumpe in Betrieb ist und Kraftstoff unnötig durch die Saugstrahlpumpe gefördert wird. Dies trägt zu einer störenden Schaumbildung im Kraftstoffbehälter und zu einem unnötigen Energieverbrauch der Kraftstoffpumpe bei.

Der Erfindung liegt das Problem zugrunde, eine Entlüftungseinrichtung der eingangs genannten Art so zu gestalten, dass sie einen unnötigen Energieverbrauch für die Saugstrahlpumpe und unnötige Schaumbildung im Kraftstoffbehälter vermeidet.

Dieses Problem wird erfindungsgemäß dadurch gelöst, dass die Saugstrahlpumpe mit einem Ventil verbunden ist und dass das Ventil in Abhängigkeit von dem Füllstand an Kraftstoff in der Flüssigkeitsfalle schaltbar ist.

Durch diese Gestaltung lässt sich die Saugstrahlpumpe über das Ventil abschalten, wenn sich kein Kraftstoff in der Flüssigkeitsfalle angesammelt hat. Erst oberhalb eines vorgesehenen Füllstandes kann das Ventil geöffnet und die Saugstrahlpumpe mit Kraftstoff versorgt werden. Hierdurch lässt sich auf besonders einfache Weise vermeiden, dass die Saugstrahlpumpe bei leerer Flüssigkeitsfalle im Betrieb gehalten wird. Dank der Erfindung verhindert die Abschaltung der Saugstrahlpumpe bei leerer Flüssigkeitsfalle einen unnötigen Energieverbrauch und eine unnötige Schaumbildung im Kraftstoffbehälter.

In der Regel genügt es, das Absaugen des Kraftstoffs aus der Flüssigkeitsfalle erst durchzuführen, wenn ein vorgesehener Füllstand erreicht ist. Hierbei gestaltet sich die erfindungsgemäße Entlüftungseinrichtung konstruktiv besonders einfach, wenn in der Flüssigkeitsfalle ein Füllstandsgrenzschalter zur Schaltung des Ventils angeordnet ist.

Der Füllstandsgrenzschalter gestaltet sich gemäß einer anderen vorteilhaften Weiterbildung der Erfindung konstruktiv besonders einfach, wenn der Füllstandsgrenzschalter einen Schwimmer aufweist.

Die Steuerung des Ventils könnte beispielsweise vollständig mechanisch erfolgen, indem ein gegen einen Ventilsitz beweglicher Ventilkörper mit dem Schwimmer verbunden ist. Die Saugstrahlpumpe lässt sich jedoch gemäß einer anderen vorteilhaften Weiterbildung der Erfindung besonders zuverlässig ansteuern, wenn das Ventil elektrisch geschaltet ist.

Das Ventil lässt sich besonders kostengünstig fertigen, wenn das Ventil einen.elektrischen Aktor aufweist und ein gegen einen Ventilsitz bewegbarer Ventilkörper mit dem Aktor in Verbindung steht.

Das elektrisch geschaltete Ventil gestaltet sich konstruktiv besonders einfach, wenn der elektrische Aktor einen Elektromagneten oder ein Piezoelement aufweist.

Die Steuerung des elektrisch geschalteten Ventils gestaltet sich gemäß einer anderen vorteilhaften Weiterbildung der Erfindung besonders einfach, wenn der Füllstandsgrenzschalter einen elektrischen Kontakt hat. Der elektrische Kontakt lässt sich in Abhängigkeit von dem Füllstand in der Flüssigkeitsfalle öffnen und schließen.

Der Steuerungsaufwand für die Schaltung des Ventils lässt sich gemäß einer anderen vorteilhaften Weiterbildung der Erfindung besonders gering halten, wenn der elektrische Kontakt des Füllstandsgrenzschalters mit dem elektrischen Aktor des Ventils in einer Reihe angeordnet ist.

Die erfindungsgemäße Entlüftungseinrichtung ermöglicht eine besonders vielfältige Ansteuerung des Ventils, wenn der elektrische Kontakt des Füllstandsgrenzschalters und der elektrischen Aktor des Ventils mit einer gemeinsamen elektronischen Steuereinheit verbunden sind. Hierbei kann beispielsweise die Ansteuerung des Ventils bei besonders niedrigen Temperaturen oder beim Start der Brennkraftmaschine des Kraftfahrzeuges unterbleiben. In diesen Fällen wird meist der gesamte, von der Kraftstoffpumpe geförderte Kraftstoff für die Brennkraftmaschine benötigt. Die durch die elektronische Steuereinheit mögliche Schließung des Ventils verhindert damit, dass Kraftstoff bei niedrigen Temperaturen oder beim Start der Brennkraftmaschine zu der Saugstrahlpumpe der Flüssigkeitsfalle abgezweigt wird.

Die Montage der erfindungsgemäßen Entlüftungseinrichtung gestaltet sich besonders einfach, wenn ein zur Montage im Kraftstoffbehälter vorgesehener Schwalltopf eine elektromotorische Kraftstoffpumpe aufweist, wenn eine Förderleitung der Kraftstoffpumpe mit der Saugstrahlpumpe verbunden ist und wenn der Schwalltopf mit der Flüssigkeitsfalle eine bauliche Einheit bildet. Vorzugsweise ist der Schwalltopf an der Flüssigkeitsfalle befestigt.

Das Ventil und die Saugstrahlpumpe lassen sich gemäß einer anderen vorteilhaften Weiterbildung der Erfindung zu einer besonders kompakten Einheit zusammenstellen, wenn der Ventilkörper des Ventils auf eine Düse der Saugstrahlpumpe zu beweglich geführt ist. Hierdurch ermöglicht es das Ventil, die Saugstrahlpumpe unmittelbar zu verschließen oder freizugeben.

Eine Störung der Förderung der Saugstrahlpumpe durch den nahe an der Düse angeordneten Ventilkörper lässt sich gemäß einer anderen vorteilhaften Weiterbildung der Erfindung einfach vermeiden, wenn das Ventil in der Förderleitung angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine erste Ausführungsform der erfindungsgemäßen Entlüftungseinrichtung,
- Fig. 2: schematisch eine weitere Ausführungsform der erfindungsgemäßen Entlüftungseinrichtung mit einer elektronischen Steuereinheit,
- Fig. 3, 4: zwei Ausführungsformen eines Ventils der er findungsgemäßen Entlüftungseinrichtung aus Figur 1 oder 2 mit einem Piezoelement,
- Fig. 5, 6: zwei Ausführungsformen des Ventils der erfindungsgemäßen Entlüftungseinrichtung aus Figur 1 oder 2 mit einem Elektromagneten,
- Fig. 7, 8: zwei Ausführungsformen eines vollständig mechanischen Ventils der erfindungsgemäßen Entlüftungseinrichtung.

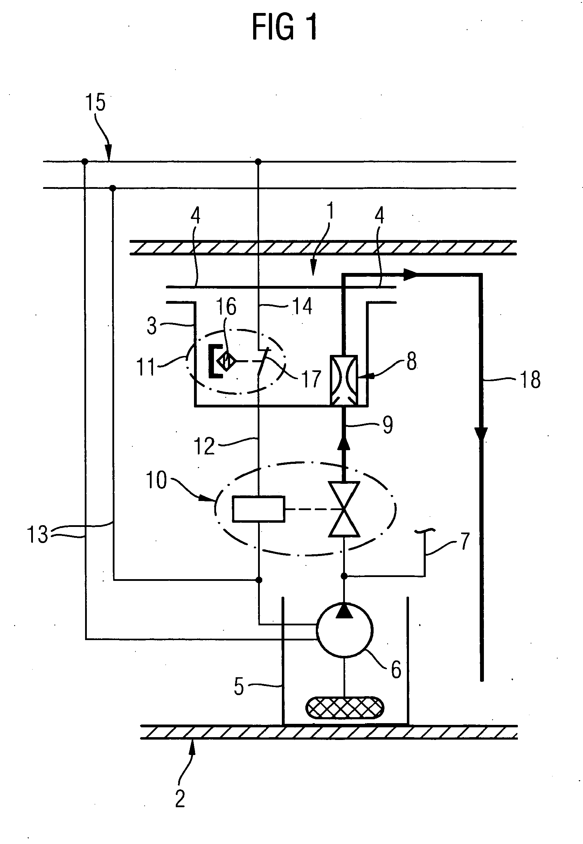

Figur 1 zeigt eine Entlüftungseinrichtung 1 für einen Kraftstoffbehälter 2 eines Kraftfahrzeuges mit einer im oberen Bereich angeordneten Flüssigkeitsfalle 3. Von der Flüssigkeitsfalle 3 führen Entlüftungsleitungen 4 zu seitlichen Bereichen des Kraftstoffbehälters 2. Weiterhin ist an dem Boden des Kraftstoffbehälters 2 ein Schwalltopf 5 mit einer elektromotorischen Kraftstoffpumpe 6 angeordnet. Die Kraftstoffpumpe 6 saugt Kraftstoff aus dem Schwalltopf 5 an und fördert diesen über eine Vorlaufleitung 7 zu einer nicht dargestellten Brennkraftmaschine des Kraftfahrzeuges. In der Flüssigkeitsfalle 3 ist eine Saugstrahlpumpe 8 angeordnet, welche über eine Förderleitung 9 mit der Vorlaufleitung 7 der Kraftstoffpumpe 6 verbunden ist. In der Förderleitung 9 ist ein elektrisch schaltbares Ventil 10 angeordnet, welches mit einem in der Flüssigkeitsfalle 3 angeordneten Füllstandsgrenzschalter 11 über eine elektrische Leitung 12 in Verbindung steht. Der Füllstandsgrenzschalter 11, das elektrisch schaltbare Ventil 10 und die Kraftstoffpumpe 6 sind ebenfalls über elektrischen Leitungen 13, 14 mit einem Bordnetz 15 des Kraftfahrzeuges verbunden. Der Füllstandsgrenzschalter 11 hat einen von einem Schwimmer 16 schaltbaren, elektrischen Kontakt 17.

Bei Überschreitung eines vorgesehenen Füllstandes an Kraftstoff in der Flüssigkeitsfalle 3 wird der Schwimmer 16 ausgelenkt und schließt den elektrischen Kontakt 17 des Füllstandsgrenzschalters 11. Damit wird das elektrisch schaltbare Ventil 10 mit dem Bordnetz 15 verbunden, öffnet sich und gibt die Förderleitung 9 frei. Damit fördert die Kraftstoffpumpe 6 Kraftstoff als Treibmittel zu der Saugstrahlpumpe 8. Die Saugstrahlpumpe 8 saugt anschließend angesammelten Kraftstoff aus der Flüssigkeitsfalle 3 an und fördert diesen über eine Ablassleitung 18 in den Kraftstoffbehälter 2. Umgekehrt wird unterhalb des vorgesehenen Füllstandes an Kraftstoff in der Flüssigkeitsfalle 3 das elektrisch schaltbare Ventil 10 nicht mit dem Bordnetz 15 verbunden, so dass die Saugstrahlpumpe 8 keinen Kraftstoff als Treibmittel erhält und der gesamte, von der Kraftstoffpumpe 6 geförderte Kraftstoff in die Vorlaufleitung 7 gelangt.

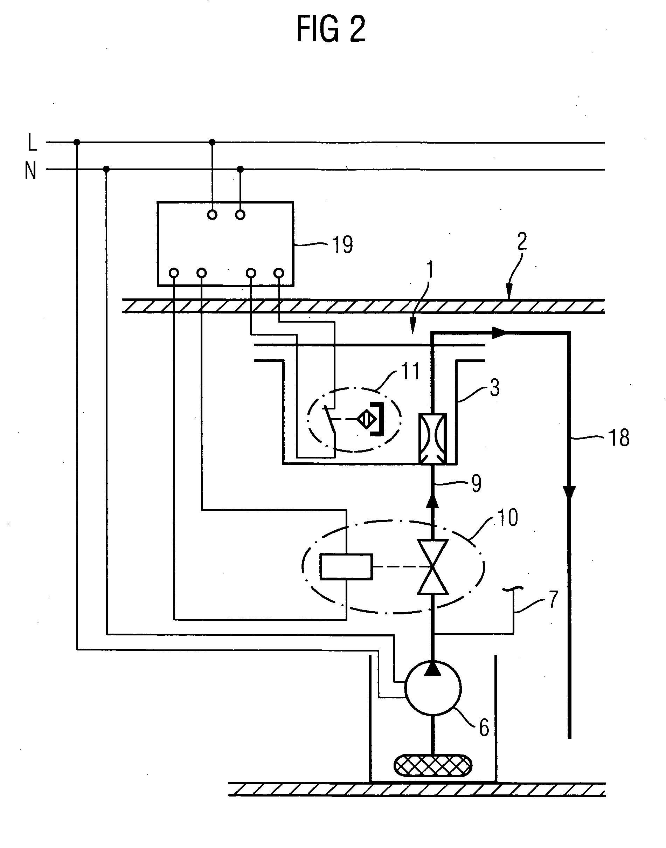

Figur 2 zeigt eine weitere Ausführungsform der Entlüftungseinrichtung 1, welche sich von der aus Figur 1 nur dadurch unterscheidet, dass der in der Flüssigkeitsfalle 3 angeordnete Füllstandsgrenzschalter 11 und das elektrisch schaltbare Ventil 10 jeweils mit einer elektronischen Steuereinheit 19 verbunden sind. Die elektronische Steuereinheit 19 steuert das elektronisch schaltbare Ventil 10, wie zu Figur 1 beschrieben, an. Weiterhin vermag die elektronische Steuereinheit 19 bei einem entsprechenden Steuerprogramm beispielsweise ein Öffnen des Ventils 10 verhindern, wenn bei vorgesehenen Betriebszuständen der gesamte, von der Kraftstoffpumpe 6 geförderte Kraftstoff in die Vorlaufleitung 7 gefördert werden soll. Solche Betriebszustände liegen beispielsweise beim Start der Brennkraftmaschine und bei niedrigen Temperaturen vor. Ebenso ist ein zeitgesteuertes Öffnen des Ventils 10 möglich, so dass sichergestellt wird, dass die Flüssigkeitsfalle 3 bei jeder Schaltung des Ventils 10 zuverlässig geleert wird.

In den Figuren 1 und 2 ist das Ventil 10 schematisch außerhalb der Flüssigkeitsfalle 3 dargestellt. Selbstverständlich kann das Ventil 10 auch innerhalb der Flüssigkeitsfalle 3 angeordnet sein und mit der Saugstrahlpumpe 8 und/oder dem Füllstandsgrenzschalter 11 eine bauliche Einheit bilden. Bei einer rein mechanischen Ansteuerung des Ventils 10 werden in einer alternativen, nicht dargestellten Ausführungsform zudem keine elektrischen Leitungen 12, 14 zur Verbindung des Ventils 10 und des Füllstandsgrenzschalters 11 mit dem Bordnetz 15 benötigt.

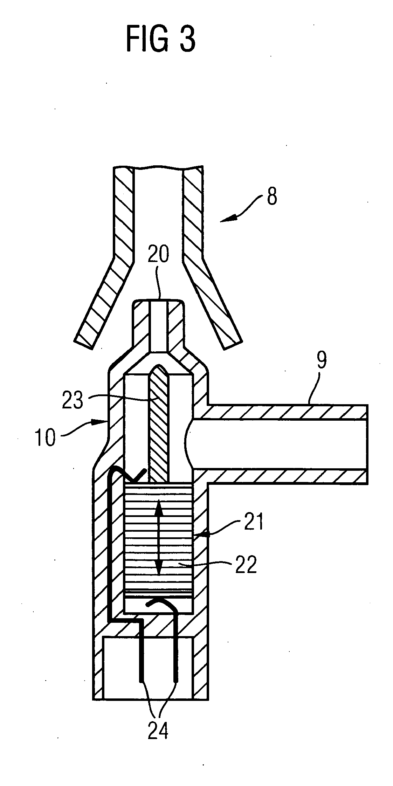

Figur 3 zeigt eine bauliche Einheit aus einer Düse 20 der Saugstrahlpumpe 8 und dem elektrisch schaltbaren Ventil 10. Das elektrisch schaltbare Ventil 10 weist einen Aktor 21 mit einem Piezoelement 22 auf. Bei einer Bestromung des Piezoelementes 22 wird ein Ventilkörper 23 von der Düse 20 der Saugstrahlpumpe 8 weg bewegt und gibt die Verbindung der Saugstrahlpumpe 8 mit der Förderleitung 9 frei. Elektrische Kontakte 24 dienen zur Verbindung des Aktors 21 mit den in den Figuren 1 und 2 dargestellten elektrischen Leitungen 12.

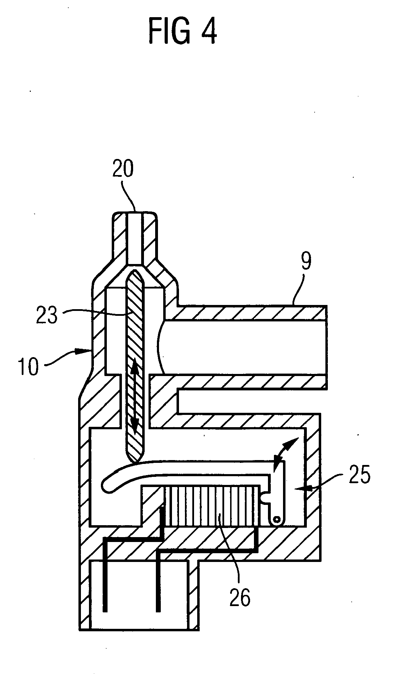

Figur 4 zeigt eine weitere Ausführungsform der baulichen Einheit aus einer Düse 20 der Saugstrahlpumpe 8 mit dem elektrisch schaltbaren Ventil 10. Wie bei der Ausführungsform nach Figur 3 hat das Ventil 10 einen Aktor 25 mit einem Piezoelement 26. Das Piezoelement 26 steuert über einen Hebel 27 die Bewegung des Ventilkörpers 23.

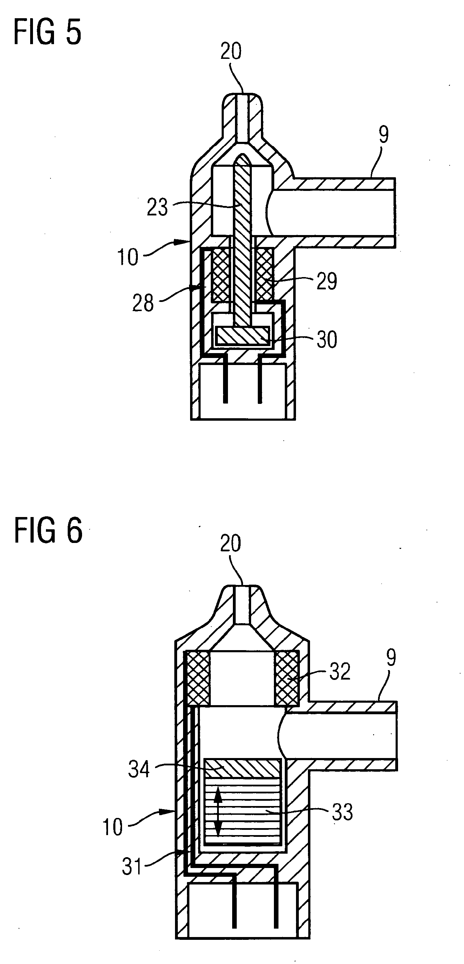

Figur 5 zeigt eine weitere Ausführungsform der baulichen Einheit aus einer Düse 20 der Saugstrahlpumpe 8 mit dem elektrisch schaltbaren Ventil 10. Im Gegensatz zu den Ausführungsformen nach den Figuren 3 und 4 hat das Ventil 10 einen Aktor 28 mit einem Elektromagneten 29. Der Elektromagnet 29 bewegt einen mit dem Ventilkörper 23 verbundenen Magneten 30. Bei einer entsprechenden Bestromung wird damit der Ventilkörper 23 auf die Düse 20 der Saugstrahlpumpe 8 zu oder von dieser weg bewegt.

Figur 6 zeigt eine weitere Ausführungsform der baulichen Einheit aus einer Düse 20 der Saugstrahlpumpe 8 mit dem elektrisch schaltbaren Ventil 10, bei der das Ventil 10 einen Aktor 31 mit einem Elektromagneten 32 hat. Ein Verschlusszylinder 33 mit einem Magneten 34 lässt sich bei einer entsprechenden Bestromung in die Förderleitung 9 hinein bewegen und damit die Förderung von Kraftstoff zu der Düse 20 der Saugstrahlpumpe 8 unterbrechen.

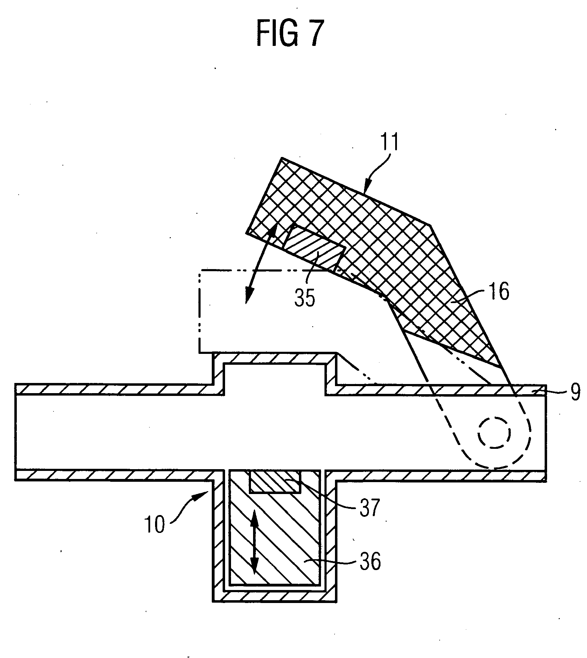

Figur 7 zeigt eine weitere.Ausführungsform der Entlüftungseinrichtung 1, bei der das Ventil 10 in der zu der Saugstrahlpumpe 8 führenden Förderleitung 9 angeordnet ist und eine bauliche Einheit mit einem Füllstandsgrenzschalter 11 bildet. Im Gegensatz zu den vorangegangenen Ausführungsformen ist das Ventil 10 mit dem Schwimmer 16 verbunden und weist damit eine rein mechanische Funktion auf. Der Schwimmer 16 trägt einen Magneten 35, welcher auf eine Wandung der Förderleitung 9 zu bewegbar gelagert ist. Das Ventil 10 weist einen längsbeweglich geführten Verschlusszylinder 36 mit einem Magneten 37 auf. Bei auf der Wandung liegendem Schwimmer 16 wird der Verschlusszylinder 36 angezogen und verschließt die Förderleitung 9. Die Stellung des auf der Wandung der Förderleitung 9 liegenden Schwimmers 16 ist in Figur 7 strichpunktiert dargestellt. Selbstverständlich ist der den Füllstandsgrenzschalter 11 aufweisende Abschnitt der Förderleitung 9 an der vorgesehenen Stelle in der in den Figuren 1 und 2 dargestellten Flüssigkeitsfalle 3 anzuordnen.

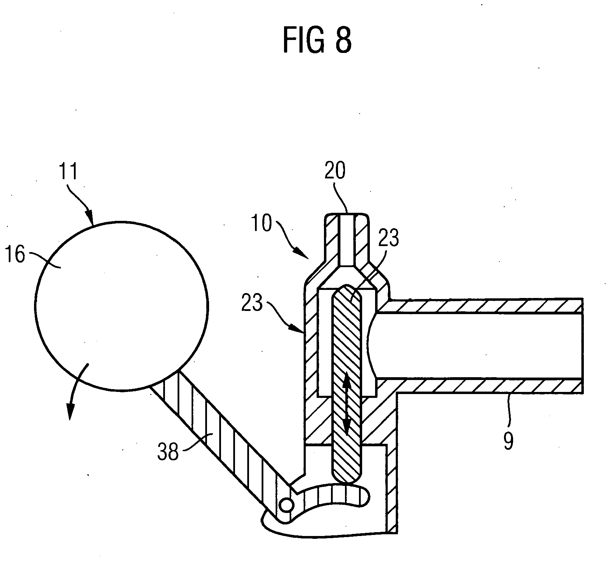

Figur 8 zeigt eine weitere Ausführungsform der Entlüftungseinrichtung 1, bei der das Ventil 10 eine bauliche Einheit mit der Düse 20 der Saugstrahlpumpe 8 und dem Füllstandsgrenzschalter 11 bildet. Der Schwimmer 16 des Füllstandsgrenzschalters 11 ist über einen Hebel 38 mit dem längsverschieblich auf die Düse 20 zu bewegbaren Ventilkörper 23 verbunden. Wie bei der Ausführungsform nach Figur 7 sind auch hier der Schwimmer 16 und das Ventil 10 innerhalb der Flüssigkeitsfalle 3 anzuordnen.

## Patentansprüche

1. Entlüftungseinrichtung (1) für einen Kraftstoffbehälter (2) mit einer mit zumindest einer Entlüftungsleitung (4) verbundenen Flüssigkeitsfalle (3) und mit einer in der Flüssigkeitsfalle (3) angeordneten Saugstrahlpumpe (8) zur Förderung von Kraftstoff aus der Flüssigkeitsfalle in den Kraftstoffbehälter (2), **dadurch gekennzeichnet , dass** die Säugstrahlpumpe (8) mit einem Ventil (10) verbunden ist und dass das Ventil (10) in Abhängigkeit von dem Füllstand an Kraftstoff in der Flüssigkeitsfalle (3) schaltbar ist.

2. Entlüftungseinrichtung nach Anspruch 1, **dadurch gekennzeichnet, dass** in der Flüssigkeitsfalle (3) ein Füllstandsgrenzschalter (11) zur Schaltung des Ventils (10) angeordnet ist.

3. Entlüftungseinrichtung nach Anspruch 1 oder 2, **dadurch gekennzeichnet, dass** der Füllstandsgrenzschalter (11) einen Schwimmer (16) aufweist.

4. Entlüftungseinrichtung nach zumindest einem der vorhergehenden Ansprüche, **dadurch gekennzeichnet, dass** das Ventil (10) elektrisch geschaltet ist.

5. Entlüftungseinrichtung nach zumindest einem der vorhergehenden Ansprüche, **dadurch gekennzeichnet, dass** das . Ventil (10) einen elektrischen Aktor (21, 25, 28, 31) aufweist und ein gegen einen Ventilsitz bewegbarer Ventilkörper (23) mit dem Aktor (21, 25, 28, 31) in Verbindung steht.

6. Entlüftungseinrichtung nach zumindest einem der vorhergehenden Ansprüche, **dadurch gekennzeichnet, dass** der elektrische Aktor (21, 25, 28, 31) einen Elektromagneten (29, 32) oder ein Piezoelement (22, 26) aufweist.

7. Entlüftungseinrichtung nach zumindest einem der vorhergehenden Ansprüche, **dadurch gekennzeichnet, dass** der Füllstandsgrenzschalter (11) einen elektrischen Kontakt (17) hat.

8. Entlüftungseinrichtung nach zumindest einem der vorhergehenden Ansprüche, **dadurch gekennzeichnet, dass** der elektrische Kontakt (17) des Füllstandsgrenzschalters (11) mit dem elektrischen Aktor (21, 25, 28, 31) des Ventils (10) in einer Reihe angeordnet ist.

9. Entlüftungseinrichtung nach zumindest einem der vorhergehenden Ansprüche, **dadurch gekennzeichnet, dass** der elektrische Kontakt (17) des Füllstandsgrenzschalters (11) und der elektrischen Aktor (21, 25, 28, 31) des Ventils (10) mit einer gemeinsamen elektronischen Steuereinheit (19) verbunden sind.

10. Entlüftungseinrichtung nach zumindest einem der vorhergehenden Ansprüche, **dadurch gekennzeichnet , dass** ein zur Montage im Kraftstoffbehälter (2) vorgesehener Schwalltopf (5) eine elektromotorische Kraftstoffpumpe (6) aufweist, dass eine Förderleitung (9) der Kraftstoffpumpe (6) mit der Saugstrahlpumpe (8) verbunden ist und dass der Schwalltopf (5) mit der Flüssigkeitsfalle (3) eine bauliche Einheit bildet.

11. Entlüftungseinrichtung nach zumindest einem der vorhergehenden Ansprüche, **dadurch gekennzeichnet, dass** der Ventilkörper (23) des Ventils (10) auf eine Düse (20) der Saugstrahlpumpe (8) zu beweglich geführt ist.

12. Entlüftungseinrichtung nach zumindest einem der vorhergehenden Ansprüche, **dadurch gekennzeichnet, dass** das Ventil (10) in der Förderleitung (9) angeordnet ist.

## Claims

1. Ventilation device (1) for a fuel container (2), with a liquid trap (3) connected to at least one ventilation line (4) and with a suction jet pump (8), arranged in the liquid trap (3), for the conveyance of fuel out of the liquid trap into the fuel container (2), **characterized in that** the suction jet pump (8) is connected to a valve (10), and **in that** the valve (10) can be switched as a function of the filling level of fuel in the liquid trap (3).

2. Ventilation device according to Claim 1, **characterized in that** a filling-level limit switch (11) for switching the valve (10) is arranged in the liquid trap (3).

3. Ventilation device according to Claim 1 or 2, **characterized in that** the filling-level limit switch (11) has a float (16).

4. Ventilation device according to at least one of the preceding claims, **characterized in that** the valve (10) is switched electrically.

5. Ventilation device according to at least one of the preceding claims, **characterized in that** the valve (10) has an electric actuator (21, 25, 28, 31) and a valve body (23) movable against a valve seat is connected to the actuator (21, 25, 28, 31).

6. Ventilation device according to at least one of the preceding claims, **characterized in that** the electric actuator (21, 25, 28, 31) has an electromagnet (29, 32) or a piezoelement (22, 26).

7. Ventilation device according to at least one of the preceding claims, **characterized in that** the filling-level limit switch (11) has an electrical contact (17).

8. Ventilation device according to at least one of the preceding claims, **characterized in that** the electrical contact (17) of the filling-level limit switch (11) is arranged in series with the electric actuator (21, 25, 28, 31) of the valve (10).

9. Ventilation device according to at least one of the preceding claims, **characterized in that** the electrical contact (17) of the filling-level limit switch (11) and the electric actuator (21, 25, 28, 31) of the valve (10) are connected to a common electronic control unit (19).

10. Ventilation device according to at least one of the preceding claims, **characterized in that** a baffle (5) provided for mounting in the fuel container (2) has an electromotive fuel pump (6), **in that** a conveying line (9) of the fuel pump (6) is connected to the suction jet pump (8), and **in that** the baffle (5) forms with the liquid trap (3) a structural unit.

11. Ventilation device according to at least one of the preceding claims, **characterized in that** the valve body (23) of the valve (10) is guided movably toward a nozzle (20) of the suction jet pump (8).

12. Ventilation device according to at least one of the preceding claims, **characterized in that** the valve (10) is arranged in the conveying line (9).

## Revendications

1. Dispositif d'aération (1) pour réservoir à carburant (2), comportant un piège à liquides (3) relié à au moins une conduite d'aération (4) et une pompe à jet aspirant (8) placée dans le piège à liquides (3) et destinée à transférer du carburant du piège à liquides vers le réservoir à carburant (2), **caractérisé par le fait que** la pompe à jet aspirant (8) est liaison avec une soupape (10) et que la soupape (10) peut être commutée en fonction du taux de remplissage en carburant dans le piège à liquides (3).

2. Dispositif d'aération selon la revendication 1, **caractérisé par le fait qu'**un commutateur (11) de limitation du niveau de remplissage destiné à commander la soupape (10) est placé dans le piège à liquides (3).

3. Dispositif d'aération selon la revendication 1 ou 2, **caractérisé par le fait que** le commutateur (11) de limitation du niveau de remplissage comporte un flotteur (16).

4. Dispositif d'aération selon au moins l'une des revendications précédentes, **caractérisé par le fait que** la soupape (10) est commandée électriquement.

5. Dispositif d'aération selon au moins l'une des revendications précédentes, **caractérisé par le fait que** la soupape (10) comporte un actionneur électrique (21, 25, 28, 31) et qu'un corps de soupape (23) qui peut se déplacer contre le siège de soupape est en liaison avec l'actionneur (21, 25, 28, 31).

6. Dispositif d'aération selon au moins l'une des revendications précédentes, **caractérisé par le fait que** l'actionneur électrique (21, 25, 28, 31) comporte un électro-aimant (29, 32) ou un élément piézoélectrique (22, 26).

7. Dispositif d'aération selon au moins l'une des revendications précédentes, **caractérisé par le fait que** le commutateur (11) de limitation du niveau de remplissage a un contact électrique (17).

8. Dispositif d'aération selon au moins l'une des revendications précédentes, **caractérisé par le fait que** le contact électrique (17) du commutateur (11) de limitation du niveau de remplissage est monté en série avec l'actionneur électrique (21, 25, 28, 31) de la soupape (10).

9. Dispositif d'aération selon au moins l'une des revendications précédentes, **caractérisé par le fait que** le contact électrique (17) du commutateur (11) de limitation du niveau de remplissage et l'actionneur électrique (21, 25, 28, 31) de la soupape (10) sont reliés à une unité électronique commune de commande (19).

10. Dispositif d'aération selon au moins l'une des revendications précédentes, **caractérisé par le fait qu'**un pot d'accumulation (5) prévu pour être monté dans le réservoir à carburant (2) comporte une pompe à carburant (6) entrainée par un moteur électrique, qu'une conduite d'alimentation (9) de la pompe à carburant (6) est reliée à la pompe à jet aspirant (8) et que le pot d'accumulation (5) forme avec le piège à liquides (3) une unité constructive unique.

11. Dispositif d'aération selon au moins l'une des revendications précédentes, **caractérisé par le fait que** le déplacement du corps de soupape (23) de la soupape (10) est guidé vers un gicleur (20) de la pompe à jet aspirant (8).

12. Dispositif d'aération selon au moins l'une des revendications précédentes, **caractérisé par le fait que** la soupape (10) est placée sur la conduite d'alimentation (9).
